Europäisches Patentamt

European Patent Office

Office européen des brevets

(11) Veröffentlichungsnummer: **0 309 613**
**A1**

## (12) EUROPÄISCHE PATENTANMELDUNG

(21) Anmeldenummer: 87114422.6

(22) Anmeldetag: 02.10.87

(51) Int. Cl.⁴ **B25J 18/02 , F15B 15/02**

(43) Veröffentlichungstag der Anmeldung:
05.04.89 Patentblatt 89/14

(84) Benannte Vertragsstaaten:
**AT BE CH DE ES FR GB GR IT LI LU NL SE**

(71) Anmelder: **Höfler & Kobler**
**Handhabungsautomaten**
**Töbelimühlistrasse 8a**
**CH-9224 Reineck(CH)**

(72) Erfinder: **Höfler, Herbert**
**Giessenstrasse 9A**
**CH-9434 Au/SG(CH)**
Erfinder: **Kobler, Günter**
**Im Egler**
**CH-9423 Altenrhein /SG(CH)**

(74) Vertreter: **Klunker . Schmitt-Nilson . Hirsch**
**Winzererstrasse 106**
**D-8000 München 40(DE)**

(54) **Parallelführung von Linearantrieben.**

(57) Eine Vorrichtung zur Parallelführung linearer Antriebe und/oder mit diesen gekoppelter Kraftübertragungselemente mit mindestens zwei in der Bewegungsrichtung verlaufenden, relativ zu entsprechenden Führungsflächen bewegbaren Führungskörpern.

Zur Verbesserung der Führungsgenauigkeit durch Sicherstellung einer hohen Präzision der Parallelität der Führungselemente bei gleichzeitiger Vermeidung von unerwünschten Kraft- und Drehmomenteinflüssen auf den Linearantrieb sind die Führungsflächen (12,22,32.5,44) und die Führungskörper (14,24,31.2,45) erfindungsgemäss als integrierende Bestandteile des Antriebsmechanismus ausgebildet, wobei die Baulänge mindestens der Führungskörper (14,24,31.2,45) grösser als der Hubweg des Linearantriebes (13,18;23,28;33.1,33.2;52,53) ist.

Es wird ferner auch ein Beispiel für eine Verwendung der erfindungsgemässen Vorrichtung bei einem Handhabungsgerät (5) dargelegt.

Fig.2

## Parallelführung von Linearantrieben

Die Erfindung betrifft eine Vorrichtung zur Parallelführung linearer Antriebe und/oder mit diesen gekoppelter Kraftübertragungselemente mit mindestens zwei in der Bewegungsrichtung verlaufenden, relativ zu entsprechenden Führungsflächen bewegbaren Führungskörpern sowie eine Verwendung der Vorrichtung.

Den bekannten Unzulänglichkeiten der den überwiegenden Grossteil der Linearantriebe bildenden pneumatischen und hydraulischen Druckzylinder, insbesondere hinsichtlich einer genauen Führung von deren Bewegungen bei deren Anwendung in Handhabungsgeräten, versuchte man durch Konstruktion eines anbaubaren Führungsblockes abzuhelfen. Dieser am kolbenstangenseitigen Ende des Druckzylinders montierbare Führungsblock weist zwei parallel zur Hubrichtung verlaufende Zylinderbohrungen auf. Die beiden je in einer der besagten Zylinderbohrungen geführten Führungsbolzen sind mittels einer Kupplungsplatte mit der Kolbenstange fest verschraubt und führen diese bei ihrer gemeinsamen Verschiebung. Dadurch sollen eine Verdrehung der Kolbenstange in jeder Position sowie ein seitliches Spiel derselben in ausgefahrenem Zustand und schliesslich eine einseitige Druckbeanspruchung vom Kolben bzw. Kolbenringen und Dichtungen durch ein von Querbelastung der Kolbenstange ebenfalls in ausgefahrenen Zustand verursachtes Biegemoment vermieden werden.

Ein Nachteil der geschilderten Hilfskonstruktion ist, abgesehen vom Aufwand für den Anbau, dass sie nicht zu jedem Druckzylinder passt und die Möglichkeiten für eine Abänderung der Anbaumasse beschränkt sind. Vor allem aber weisen die Zylinderbohrungen eine relativ kurze aktive Führunglänge auf, die natürlich nicht veränderbar ist. Daher lässt sich der Anbau-Führungsblock für Linearantriebe mit grösserem Hub nicht verwenden.

Die vorliegende Erfindung stellt sich die Aufgabe, eine Vorrichtung eingangs beschriebener Art in unkomplizierter Bauweise zu schaffen, die unabhängig von der Länge des notwendigen Hubweges eine präzise Bewegungsführung von Linearantrieben gestattet. Durch Sicherstellung einer genauen Parallelführung in verschiedenen Bewegungsachsen wirkender Linearantriebe soll auch ein zuverlässiges Arbeiten von Handhabungsautomaten ermöglicht werden.

Die Aufgabe wird mit Hilfe der Ausbildungsmerkmale gemäss dem kennzeichnenden Teil des Patentanspruches 1 gelöst.

Durch konstruktive Einbeziehung der aus den Komponenten Führungskörper und zugeordnete Führungsfläche bestehenden Vorrichtung zur Parallelführung in den Linearantrieb bzw. den auch die Kraftübertragungselemente mitumfassenden Antriebsmechanismus kann besagte Vorrichtung in Vergleich zu einem entsprechenden Anbau-Führungsblock wesentlich kompakter und kleiner gemacht werden. Es wird zudem eine erhebliche Vergrösserung der aktiven Führungslänge und damit eine verbesserte Führungsgenauigkeit möglich. Auch lässt sich eine hohe Präzision der Parallelität der Führungselemente erreichen. Ferner kann eine bessere Stabilität gegen Verdrehung und Spiel der Kolbenstange sowie einseitige Druckbelastung der Kolbenringe bzw. Dichtungen und somit auch eine vermehrt ruckfreie lineare Verschiebebewegung des Antriebsmechanismus gewährleistet werden.

Massnahmen zur Ausbildung besonders vorteilhafter Ausführungsformen der Erfindung sind in den abhängigen Patentansprüchen 2 bis 13 angegeben. Eine zweckmässige Verwendung der erfindungsgemässen Vorrichtung bildet den Gegenstand der Patentansprüche 14 bis 19.

Die Erfindung wird anhand der in der Zeichnung veranschaulichten, besonders vorteilhaften Ausführungsformen näher erläutert.

Es zeigen:

Fig. 1: einen Linearantrieb in Form eines Druckzylinders im Axialschnitt mit beidseitig wirkendem Druckkolben und einer integrierten Vorrichtung erster Art gemäss der Erfindung zu dessen Parallelführung, wobei zylindrische Führungssäulen mit der Kolbenstange gekoppelt sind;

Fig. 2: einen Kurzhubschlitten ebenfalls im Axialschnitt, bestehend aus einem über einen darin angeordneten, feststehenden Druckkolben axial nach Art eines Schlittens verschieblichen Druckzylinder, dessen Linearbewegungen mittels einer ortsfesten erfindungsgemässen Vorrichtung erster Art geführt werden;

Fig. 3: teilweise im Schnitt drei Hauptansichten und drei Detailansichten eines Langhubschlittens, der mit einer zweiten Ausführungsform der erfindungsgemässen Vorrichtung ausgerüstet ist;

Fig. 4: teilweise im Schnitt drei Hauptansichten einer Greifvorrichtung, deren Greifarme mit Hilfe einer erfindungsgemässen Vorrichtung erster Art in einer Richtung geführt sind, die rechtwinklig zur Hubrichtung des zugeordneten Linearantriebes verläuft und

Fig. 5: Vorder- und Seitenansicht eines Handhabungsgerätes für Stückgut, bei dem die Ausführungsformen der Erfindung gemäss den Figuren 3 und 4 zur Verwendung gelangen.

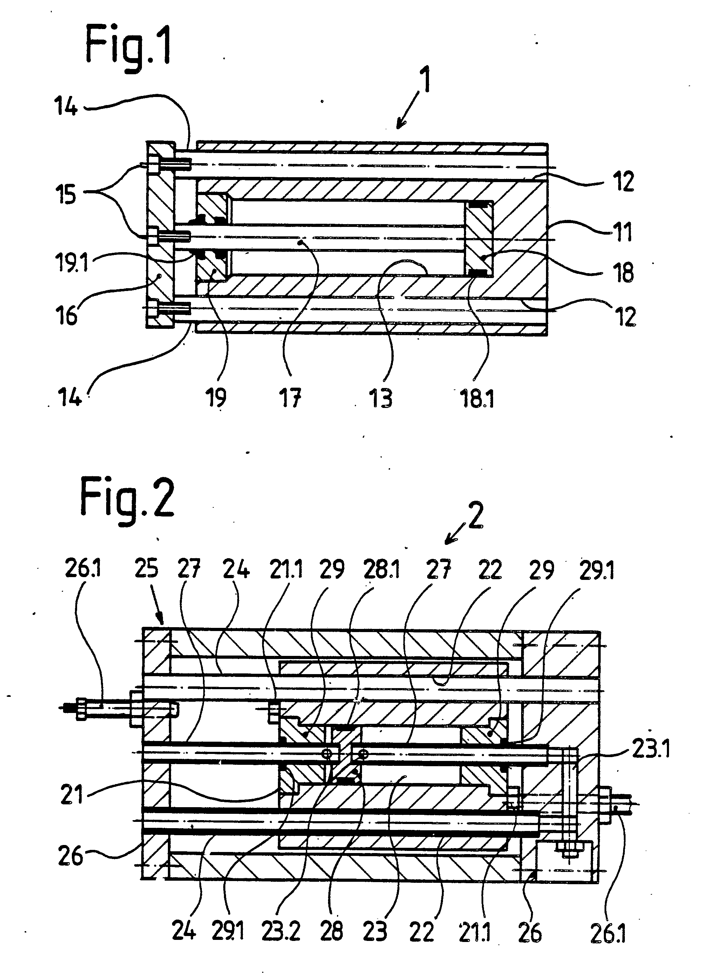

Der Linearantrieb 1 nach Fig. 1 kann zur Betätigung verschiedener Handhabungsgeräte, Roboter, Werkzeuge usw. eingesetzt werden. Es ist bei derartigen Arbeitsmaschinen eine genaue Führung von deren Bewegungen unerlässlich und der Antrieb vor schädlichen Krafteinflüssen und parasitären Drehmomenten zu schützen. In das Druckzylindergehäuse 11 sind daher zwei seitliche Zylinderbohrungen 12 integriert, deren geometrische Achsen in einer auch die geometrische Achse des Zylinderdruckraumes 13 enthaltenden Ebene liegen. In den seitlichen Zylinderbohrungen 12 ist je eine ebenfalls zylindrische Führungssäule 14 aufgenommen. Jede der Führungssäulen 14 ist mittels einer Schraubenverbindung 15 an einer Kupplungsplatte 16 befestigt, die ihrerseits über eine ähnliche Schraubenverbindung 15 mit der Kolbenstange 17 des im Zylinderdruckraum 13 angeordneten Druckkolbens 18 in Betätigungsverbindung steht. Die Baulänge der Führungssäulen 14 ist grösser als der Hubweg des Druckkolbens 18, so dass die Kontinuität der Parallelführung auf dem vollen Hubweg sichergestellt ist. An den beiden Druckflächen des Druckkolbens 18 und/oder an den beiden Endflächen des Zylinderdruckraumes 13 können nicht gezeigte Dämpfungselemente beispielsweise aus einem elastischen Werkstoff vorgesehen sein. Die beiden Druckmittelanschlüsse sind in der Schnittebene gemäss der Fig. 1 nicht sichtbar. Der Dichtring 18.1 am Umfang des Druckkolbens 18 und derjenige 19.1 in der Durchgangsbohrung der Abschlussbuchse 19 des Zylinderdruckraumes 13 sind von der Führungsfunktion entlastet.

Bei dem in der Fig. 2 dargestellten Kurzhubschlitten 2 ist das Druckzylindergehäuse 21 im Gegensatz zu demjenigen nach der Fig. 1 anhand seitlich an ihm angebrachter Zylinderbohrungen 22, deren geometrische Achsen ebenfalls in einer die Achse des Zylinderdruckraumes 23 enthaltenden Ebene liegen, achsparallelen Führungssäulen 24 entlang längsverschiebbar angeordnet. Die Führungssäulen 24 sowie jeweils das dem Druckkolben 28 abgewandte Ende einer jeden zweier andernends mit dem Druckkolben 28 verbundenen Kolbenstangenteile 27 sind hier je in einer von zwei einander gegenüberliegenden Seitenwänden 26 eines ortsfesten Rahmens 25 befestigt. Die Baulänge der Führungssäulen 24 ist hierbei ebenfalls grösser als der Hubweg des Druckzylindergehäuses 21. Der Dichtring 28.1 am Umfang des Druckkolbens 28 und diejenige 29.1 in den Durchgangsbohrungen zweier den Zylinderdruckraum 23 abschliessenden Buchsen 29 übernehmen auch beim Kurzhubschlitten 2 keine Führungsaufgaben.

Zum Zwecke der Zu- bzw. Abfuhr des Druckmittels in den bzw. aus dem Zylinderdruckraum 23 sind die beiden Kolbenstangenteile 27 und eine der Führungssäulen 24 als Anschlussrohre hohlzylindrisch ausgebildet und das in der dickeren Seitenwand 26 des ortsfesten Rahmens 25 gelagerte Ende der hohlen Führungssäule 24 über eine in derselben Seitenwand 26 ausgebildete Bohrung 23.1 mit dem Ende des dort befestigten Kolbenstangenteils 27 verbunden. Ferner weisen beide Kolbenstangenteile 27 in der Nähe ihrer im Druckkolben 28 befestigten Enden Oeffnungen 23.2 für den Druckmitteldurchtritt auf.

Jede der beiden Rahmenseitenwände 26 trägt auch einen kombinierten Signal- und Anschlagstift 26.1.Der Letztere beherbergt einen in Fig. 2 nicht gezeigten, mechanischen Endschalter, der bei Berührung durch einen jeweils an der gegenüberliegenden Stirnfläche des Druckzylindergehäuses 21 zugeordneten Gegenanschlag 21.1 aus einem härteren Material als dasjenige des Druckzylindergehäuses 21 auf elektrischem Wege das Errreichen der einen der beiden Endstellungen anzeigt. Mit Hilfe besagter Positionsmeldung wird das Einbeziehen des Kurzhubschlittens 2 in einem Programmablauf möglich.

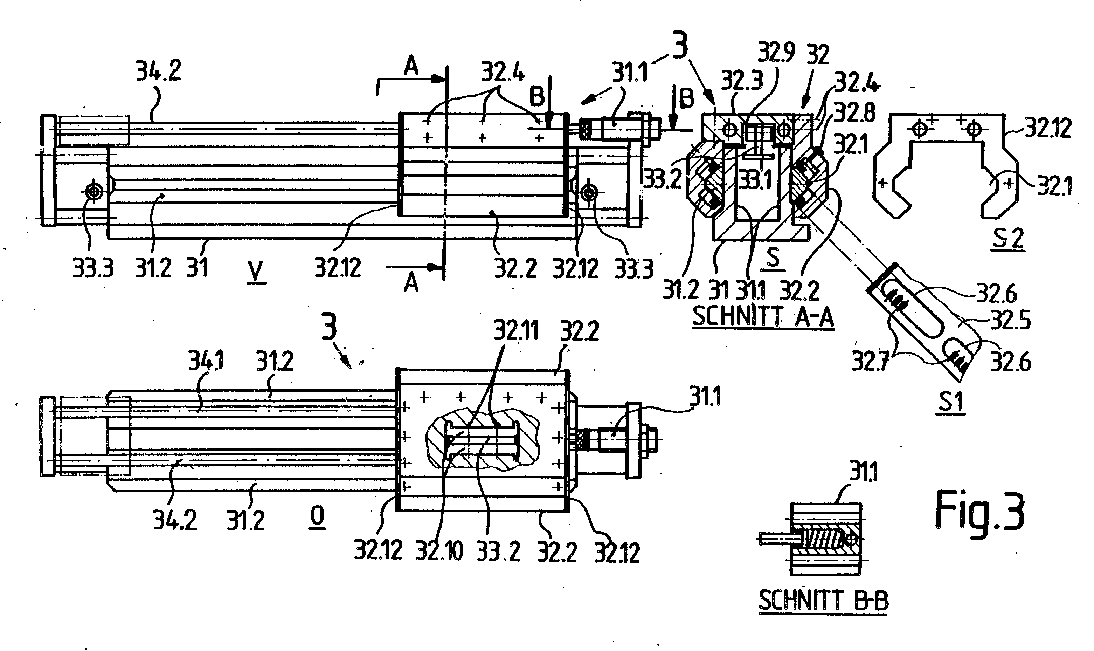

Für einen erheblich längeren Arbeits- bzw. Förderhub als derjenige des Kurzhubschlittens 2 eignet sich der Langhubschlitten 3 gemäss der Fig. 3, bei dem eine präzise Parallelführung durch eine zweite Ausführungsform der Erfindung sichergestellt ist.

Der Langhubschlitten 3 setzt sich aus einem Grundgestell 31 und einem eigenlichen Schlitten 32 zusammen ( vgl. insbesondere Seitenansicht S in Fig. 3). An der Aussenfläche einer jeden der beiden Längsseiten 31.1 des Grundgestells 31 ist je eine sich in dessen Längsrichtung erstreckende Führungsschiene 31.2 mit einem Querschnitt befestigt, der im wesentlichen die Form eines gleichschenklig-rechtwinkligen Dreieckes aufweist. Jede der Führungsschienen 31.2 durchsetzt je einen Hohlraum 32.1 ähnlichen Querschnittes in je einer senkrecht hängenden Seitenwange 32.2 des eigentlichen Schlittens 32, wobei die beiden Seitenwangen 32.2 mit Hilfe einer horizontal verlaufende Abdeckplatte 32.3 und zugehöriger Schrauben 32.4 miteinander formschlüssig verbunden sind. An je zwei mit der jeweiligen Führungsschiene 31.2 zusammenwirkenden Führungflächen 32.5 der Hohlräume 32.1 in den Seitenwangen 32.2 sind mehrere Wälzlager 32.6 mit je einer Vielzahl von Wälzkörpern 32.7 in einer Reihe nacheinander angeordnet (vgl. insbesondere Ansicht S1 in Fig.3). Das Spiel zwischen den Wälzkörpern 32.7 und der Schienenoberfläche ist mittels je zweier Regulierschrauben 32.8 einstellbar. Es gelangen hierbei mit besonderem Vorteil Wälzlager 32.6 mit Stahlrollen in Kunststoffgleitstücken als die Wälzkörper 32.7 zur Anwendung.

Die Abdeckplatte 32.3 weist an ihrer Unterseite eine nach unten offene Nut 32.9 auf, in die die Mitnehmerplatte 33.2 des kraftübertragenden Stahlbandes 33.1 eines an sich bekannten, in der Fig. 3 nicht sichtbaren Bandzylinders, der im Grundgestell 31 sich in dessen Längsrichtung erstreckend vorgesehen ist, hineinragt und mittels Verbindungslaschen 32.10 und Schrauben 32.11 an der Abdeckplatte 32.3 des Schlittens 32 befestigt ist.

Zu einer Erhöhung der Stabilität des Schlittens 32 sind dessen beide Enden je mit einem einstückigen Stützschild 32.12 versehen, das ein mit demjenigen des Schlittens 32 übereinstimmendes Profil aufweist (vgl. Ansicht S2 in Fig. 3). Es ist ferner an beiden Enden des Grundgestells 31 jeweils ein mit dem entsprechenden Stützschild 32.12 zusammenwirkender, einstellbarer Endlagendämpfer 31.1 mit pneumatischem oder hydraulischem Druckkissen angeordnet (vgl. insbesondere Schnitt B-B in Fig. 3). In der Obenansicht O und der Vorderansicht V in Fig. 3 ist jeweils lediglich der rechtsseitige Endlagendämpfer 31.1 veranschaulicht.

Die Ausführungsform der Erfindung gemäss der vorliegenden Fig. 3 ermöglicht eine exakte Führung des Schlittens 32 und damit des Bandzylinders bei zugleich spielfreiem, reibungsarmen Lauf des Schlittens 32. Die Verwendung der geschilderten Wälzlager 32.6 gestattet zudem grosse Verfahrgeschwindigkeiten, hohe Belastbarkeit und Unempfindlichkeit hinsichtlich der Wartung. Diese allseitig belastbare Führungsvorrichtung macht eine starre Linearführung auch bei grossen Hublängen realisierbar.

Der beschriebene Langhubschlitten 3 kann unter Heranziehung eines die Luftkompressibilität ausgleichenden elektronischen Steuerungssystems zu einem frei programmierbaren Positionierantrieb ausgebaut werden. Hierzu können den besagten Langhubschlitten 3 fakultativ ein Wegmesssystem und eine Feststelleinheit für diskrete Positionen längs des Hubweges angebaut werden. Die zugehörige Messsäule und Abtastsäule sind in der Obenansicht O und der Vorderansicht V gemäss der Fig. 3 mit den Bezugszeichen 34.1 und 34.2 kenntlich gemacht.

Schliesslich bezeichnet das Bezugszeichen 33.3 die beiden Druckmittelanschlüsse des Bandzylinders.

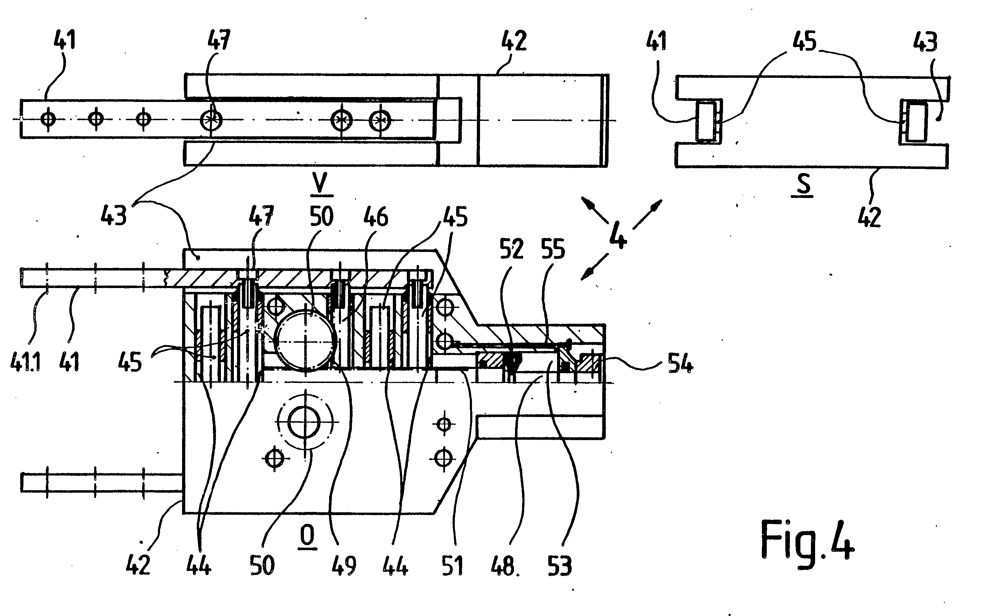

Die in der Fig. 4 mit ihrer Oben-, Vorder- und Seitenansicht O, V und S abgebildete Greifvorrichtung oder Greifzange 4 ist zu einer exakten Parallelführung ihrer Greifarme 41 mit einer Vorrichtung erster Art gemäss der Erfindung ausgerüstet.

Wie insbesondere der Obenansicht O und der Seitenansicht S in Fig. 4 entnehmbar, ist an den beiden schmalen Längsseiten des Greifzangengehäuses 42 je eine achsparallele Ausnehmung 43 mit Rechteckquerschnitt für je einen Greifarm 41 ausgebildet. Der Kern des Greifzangengehäuses 42 ist von fünf rechtwinklig zur Gehäuselängsachse, und im Grundriss O der Fig. 4 horizontal verlaufenden und in die Ausnehmungen 43 mündenden Zylinderbohrungen 44 gleichen Durchmessers durchsetzt. In die Letzteren sind abwechslungsweise zwei Führungsbolzen 45 passenden Durchmessers je Greifarm 41 sowie ein Antriebsbolzen 46 ebenfalls entsprechenden Durchmessers je Greifarm 41 eingesetzt, die sämtlich mittels Schrauben 42 jeweils mit dem zugeordneten Greifarm 41 verbunden sind. Während die Führungsbolzen 45 wenig kürzer als die Breite des Gehäusekerns sind, weisen die einander gegenüber in dieselbe mittlere Zylinderbohrung 44 eingesetzten beiden Antriebsbolzen 46 eine Baulänge auf, die um den Halbmesser einer zwischen den inneren Enden dieser Bolzen 46 in Richtung der Gehäuselängsachse verlaufenden Kolbenstange 48 kürzer als die halbe Breite des Gehäusekerns ist. Ausserdem sind die beiden Antriebsbolzen 46 auf der gleichen Seite ihrer Mantelfläche je mit einer Verzahnung 49 versehen (links in Ansicht O der Fig. 4), mit deren Hilfe sie über je ein im Gehäusekern gelagertes Zahnrad 50 mit je einer entsprechenden Verzahnung 51 in einander gegenüberliegenden Mantelsegmenten der Kolbenstange 48 in Betätigungsverbindung stehen.

An dem den Verzahnungen 51 entgegengesetzten Ende der Kolbenstange 48 ist ein gleichzeitig als Dämpfer ausgebildeter Druckkolben 52 befestigt. Der Letztere wird mit Vorteil aus Kunststoff angefertigt.

Die Kolbenstange 48 durchsetzt den Druckkolben 52 samt dem zugeordneten Druckzylinder 53. Sie trägt zur genauen Festlegung des Hubes der Greifarme 41 an ihrem aus dem Druckzylinder 53 ragenden, mit einem Gewinde versehenen Ende eine Feineinstelleinrichtung 54.

Die Länge der Führungsbolzen 45 übersteigt auch bei dieser Ausführungsform den Hubweg des Druckkolbens 52.

Anhand mit 41.1 angedeuteter Schraubenverbindungen ist eine Befestigung weiterer Greifelemente an den Greifarmen 41 möglich. Es wurde in der Oberansicht O der Fig. 4 ferner mit 55 ein Zufuhrkanal für das Druckmittel bezeichnet.

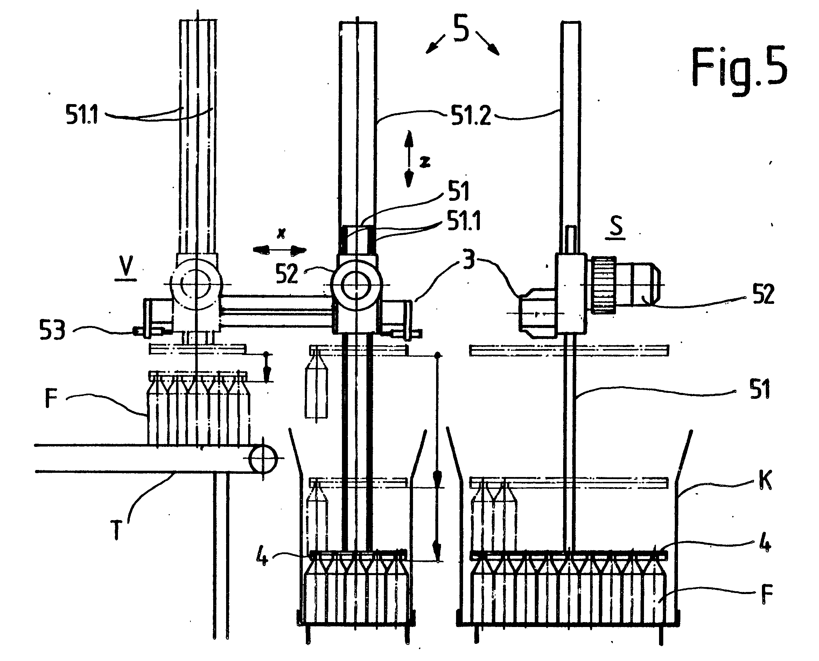

Ein Beispiel für die Verwendung beider Ausführungsformen der Erfindung bei einer Verpackungseinrichtung 5 für Flaschen F gleicher Form und Grösse lässt sich der Fig. 5 entnehmen, die Vorderansicht V und Seitenansicht S der Verpackungseinrichtung 5 darstellt. Die Letztere setzt sich aus einem Langhubschlitten 3 gemäss der Fig. 3 für die horizontal und parallel zur Zeichnungsebene verlaufende Bewegungsachse x und einem am eigentlichen Schlitten 32 (vgl. fig. 3) angeordnetem Vertikalträger 51 zusammen. Der Vertikalträger 51, der an seinem unteren Ende eine Greifzange 4 gemäss der Fig. 4 trägt, ist mittels eines Antriebes 52 in Richtung einer senkrecht verlaufenden Bewegungsachse z heb- und senkbar. Der Antrieb 52 kann vorzugsweise ein elektrischer Wechselstrom-Servomotor mit einer eingebauten berührungslosen Einrichtung zur Erkennung der jeweiligen Lage seines Läufers und mit ebenfalls integrierter Festhaltebremse sein, der über ein direkt an der Motorwelle ausgebildetes Ritzel unmittelbar mit der in der Fig. 5 nicht sichtbaren Verzahnung des Vertikalträgers 51 in Betätigungsverbindung steht. Durch die geschilderte Antriebsart kann ein hohes Haltemoment erzeugt werden. Es wäre jedoch auch die Verwendung eines elektrischen oder druckmittelbetriebenen Gebtriebemotors üblicher Art denkbar. Der Vertikalträger 51 bewegt sich in einem Schutzrahmen 51.2, wobei er anhand zweier an ihm vorgesehenen Führungsleisten 51.1 geführt wird. An den Greifarmen 41 der Greifzange 4 (vgl. Fig.4) sind zusätzliche, in der Fig. 5 nicht weiter dargestellte Greifelemente angebracht.

In den beiden Ansichten V und S der Verpakkungseinrichtung 5 ist die augenblicklich eingenommene Lage von Vertikalträger 51 und Greifzange 4 auf dem Langhubschlitten 3 in bezug auf die beiden Bewegungsachsen x und z sowie diejenige der bereits in eine Kartonschachtel K verpackten Flaschen F mit vollausgezogenen Konturen und die im Verlaufe des Verpackungsvorganges angefahrenen Positionen genannter Handhabungselemente 4,51 samt Flaschen F strichpunktiert angedeutet. Die Zufuhr der Flaschen F zur Verpackungseinrichtung 5 erfolgt mittels eines Transportbandes T. Wie es ferner aus der Fig. 5 hervorgeht, kann die Verpackung der Flaschen F auch in mehreren Lagen erfolgen.

Für den in der Fig. 5 nicht gezeigten Antrieb des Langhubschlittens 3 kann vorzugsweise ein pneumatischer oder hydraulischer Bandzylinder oder auch ein elektrischer Linearmotor zur Verwendung gelangen, wobei die Kraftübertragung auf den eigentlichen Schlitten 32 (vergl. Fig. 3) mittels einer Kette, eines Zahnriemens oder Kugelumlauftriebes realisiert werden kann.

**Ansprüche**

1. Vorrichtung zur Parallelführung linearer Antriebe und/oder mit diesen gekoppelter Kraftübertragungselemente mit mindestens zwei in der Bewegungsrichtung verlaufenden, relativ zu entsprechenden Führungsflächen bewegbaren Führungskörpern, **dadurch gekennzeichnet,** dass Führungsflächen (12,22,32.5,44) und Führungskörper (14,24,31.2,45) integrierende Bestandteile des Antriebsmechanismus bilden, wobei die Baulänge mindestens der Führungskörper (14,24,31.2,45) grösser als der Hubweg des Linearantriebes (13,18;23,28;33.1,33.2;52,53) ist.

2. Vorrichtung nach dem Anspruch 1, **dadurch gekennzeichnet,** dass die Führungskörper (14) zylindrisch ausgebildet und in Bohrungen (12) entsprechenden Querschnittes eines gemeinsamen Druckzylindergehäuses (11) verschieblich angeordnet sind.

3. Vorrichtung nach Anspruch 1 oder 2, mit einem Linearantrieb in der Gestalt eines Druckzylinders, **dadurch gekennzeichnet,** dass an den beiden Druckflächen des Druckkolbens (18) und oder an den beiden inneren Endflächen des Zylinderdruckraumes (13) je eine Dämpfungseinrichtung angeordnet ist.

4. Vorrichtung nach einem der Ansprüche 1 bis 3, dadurch gekennzeichnet, Führungskörper in der Gestalt zweier Führungsschienen (31.2) mit im wesentlichen dreieckförmigem Querschnitt, an denen ein Schlitten (32) längsverschiebbar geführt ist, wobei die Führungsschienen (31.2) je einen Hohlraum (32.1) ähnlichen Querschnittes im Inneren je einer vertikalen Seitenwange (32.2) des Schlittens (32) durchsetzen und bei dessen Verschiebung mindestens mit zwei je an den Innenseiten der Hohlräume (32.1) gebildeten Führungsflächen (32.5) zusammenwirken.

5. Vorrichtung nach dem Anspruch 4, **dadurch gekennzeichnet,** dass die Querschnittflächen von Führungsschienen (31.2) und Hohlräumen (32.1) die Form je eines gleichschenkligrechtwinkligen Dreieckes aufweisen.

6. Vorrichtung nach Anspruch 4 oder 5, dadurch gekennzeichnet, dass die Führungsflächen (32.5) durch Wälzkörper (32.7) gebildet sind.

7. Vorrichtung nach Anspruch 6, dadurch **gekennzeichnet,** dass das Spiel zwischen Wälzkörpern (32.7) und Führungsschienen (31.2) mittels Regulierschrauben (32.8) einstellbar ist.

8. Vorrichtung nach einem der Ansprüche 4 bis 7, dadurch **gekennzeichnet,** dass sich der Schlitten (32) aus zwei vertikalen Seitenwangen (32.2) und eine diese miteinander verbindenden, horizontalen Abdeckplatte (32.3) zusammensetzt und an seinen beiden Enden je mit einem Stützschild (32.12) versehen ist, dessen Profil sich mit demjenigen des Schlittens (32) deckt.

9. Vorrichtung nach einem der Ansprüche 4 bis 8, dadurch **gekennzeichnet,** dass an beiden Enden eines die Führungsschienen (31.2) tragenden Grundgestells (31) je ein aussen liegender, einstellbarer Endlagendämpfer (31.1) mit pneumatischem oder hydraulischem Druckkissen vorgesehen ist, der jeweils mit dem zugewandten Stützschild (31.12) des Schlittens (32) zusammenwirkt.

10. Vorrichtung nach einem der Ansprüche 1 bis 9, mit einem Linearantrieb in der Gestalt eines Druckzylinders, der über einen darin aufgenommenen, feststehenden Druckkolben axial nach Art eines Schlittens verschiebbar ist, **dadurch gekennzeichnet,** dass die Anschlüsse zur Zu- bzw. Abführung des Druckmittels in den bzw. aus dem Zylinderdruckraum (23) in der Kolbenstange (27) und in einem von zwei ortsfesten Führungskörpern (24) vorgesehen sind.

11. Vorrichtung nach einem der Ansprüche 1 bis 10, mit einem Druckzylinder als dem Linearantrieb,**dadurch gekennzeichnet,** dass an der Mantelfläche der Kolbenstange (48) zwei diametral einander gegenüberliegende, sich achsparallel nach Art je einer Zahnstange erstreckende Verzahnungen (51) ausgebildet sind, die jeweils mit Hilfe eines Zahnrades (50) je mit einem ebenfalls verzahnten und in Bezug auf die Kolbenstange (48) um 90 Grad verdreht angeordneten Antriebsbolzen (46) zu betätigender Vorrichtungskomponenten ( 41) in Betätigungsverbindung stehen.

12. Vorrichtung nach dem Anspruch 11·,**dadurch gekennzeichnet,** dass die Kolbenstange (48) einen gleichzeitig als Dämpfer ausgebildeten Druckkolben (52) trägt und ihr den Verzahnungen ( 51) entgegengesetztes Ende den Druckkolben (52) durchsetzt und axial aus dem zugeordneten Druckzylinder (53) hervorragt.

13. Vorrichtung nach Anspruch 11 oder 12, dadurch **gekennzeichnet,** dass zu einer genauen Festlegung des Hubes zu betätigender Vorrichtungskomponenten (41) an dem ihrem verzahnten Ende entgegengesetzten und mit einem Gewinde versehenen Ende der Kolbenstange (48) eine Feineinstelleinrichtung (54) vorgesehen ist.

14. Verwendung der Vorrichtung nach einem der Ansprüche 1 bis 13 als Manipuliereinheit mindestens für eine von mehreren Bewegungsachsen (x,z) in Handhabungsgeräten (5).

15. Verwendung nach dem Anspruch 14, bei der die Manipuliereinheit mindestens für eine horizontal gerichtete Bewegungsachse x vorgesehen ist.

16. Verwendung nach dem Anspruch 14 oder 15, wobei der Linearantrieb ein pneumatischer oder hydraulischer Bandzylinder ist.

17. Verwendung nach dem Anspruch 14 oder 15, wobei der Linearantrieb ein elektrischer Linearmotor ist.

18. Verwendung nach dem Anspruch 16 oder 17, bei der eine Kraftübertragung mittels eines Zahnriemens, einer Kette oder eines Kugelumlauftriebes vorgesehen ist.

19. Verwendung nach einem der Ansprüche 14 bis 18, bei der mindestens für eine vertikal verlaufende Bewegungsachse z ein elektrischer Wechselstrom-Servomotor mit berührungsloser Rotorlagenerkennung und mit einem unmittelbar an der Motorwelle ausgebildeten Ritzel für die Kraftübertragung angeordnet ist.

# Fig.1

# Fig.2

Fig.3

Fig.4

EP 0 309 613 A1

Fig.5

EP 0 309 613 A1

| Europäisches Patentamt | EUROPÄISCHER RECHERCHENBERICHT | Nummer der Anmeldung |
|---|---|---|
| | | EP 87 11 4422 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 017 779 (BOSCH)<br>* ganzes Dokument *<br>--- | 1-3 | B 25 J 18/02<br>F 15 B 15/02 |
| A | EP-A-0 048 905 (FANUC)<br>* Figur 2 *<br>--- | 1-3,6 | |
| A | EP-A-0 069 199 (PROMA)<br>* Zusammenfassung; Figur 2 *<br>--- | 1,4,5,8 | |
| A | DE-A-2 632 748 (ROBOMATION CORP.)<br>* Figuren 2, 4 *<br>--- | 1,6,10 | |
| A | FR-A-2 566 847 (SCHRADER)<br>* Zusammenfassung; Figur 1 *<br>--- | 1,10 | |
| A | WO-A-8 600 673 (KINZOKU)<br>* Zusammenfassung; Figuren 1, 2 *<br>--- | | |
| A | EP-A-0 194 234 (METAL MECCANICA)<br>* Figuren 1, 2; Spalte 3, Zeile 47 – Spalte 4, Zeile 9 *<br>--- | 11,12,<br>14,15 | |

| | RECHERCHIERTE SACHGEBIETE (Int. Cl.4) |
|---|---|

| A | DE-A-3 310 108 (MANTEC)<br>* Figur 2; Seite 8, Zeile 20 – Seite 9, Zeile 27 * | 11,12,<br>14,15 | B 25 J 18/00<br>F 15 B 15/00<br>B 25 J 15/00<br>B 25 J 5/00 |

Der vorliegende Recherchenbericht wurde für alle Patentansprüche erstellt

| Recherchenort | Abschlußdatum der Recherche | Prüfer |
|---|---|---|
| BERLIN | 16-05-1988 | GERTIG I. |